# EUROPÄISCHE PATENTSCHRIFT

(11) **EP 4 177 555 B1**
(45) Veröffentlichungstag und Bekanntmachung des Hinweises auf die Patenterteilung: **21.08.2024**
(21) Anmeldenummer: 21206173.3
(22) Anmeldetag: 03.11.2021
(51) Int. Cl.: F27B 3/10, F27D 1/18

(54) **SCHLACKENTÜRANORDNUNG UND REINIGUNGSVERFAHREN**
SLAG DOOR ASSEMBLY AND CLEANING METHOD
AGENCEMENT DE PORTE À SCORIES ET PROCÉDÉ DE NETTOYAGE

(43) Veröffentlichungstag der Anmeldung: 10.05.2023
(73) Patentinhaber: Badische Stahl-Engineering GmbH, 77694 Kehl (DE)
(72) Erfinder: SCHWEIKLE, Ralf, 79261 Gutach im Breisgau (DE)
(74) Vertreter: Kramer Barske Schmidtchen Patentanwälte PartG mbB

(56) Entgegenhaltungen:
- EP-B1- 2 834 581
- ES-A1- 2 568 519
- US-A1- 2001 048 187

## Beschreibung

Die Erfindung betrifft eine Schlackentüranordnung für einen metallurgischen Ofen und ein Verfahren zur Reinigung der Schlackenöffnung eines metallurgischen Ofens.

Metallurgische Öfen wie elektrische Lichtbogenöfen sind z.B. aus der EP 0 385 434 A2 (Familienmitglied US 5,153,894) oder der US 4,679,773 bekannt.

Elektrische Lichtbogenöfen (ELBO, auch Englisch Electric Arc Furnace = EAF) gibt es in verschiedenen Bauformen in Bezug auf die Gestaltung des Abstichs. Abstich (Englisch tapping oder tap) bezeichnet als Vorgang das Auslaufen lassen oder Ausgießen des flüssigen Stahls aus dem Schmelzgefäß bei der Stahlherstellung und bezeichnet als Vorrichtung die entsprechende Gestaltung des metallurgischen Schmelzgefäßes.

ELBOs können einen Abstich in Form einer Abstichrinne (Englisch tapping spout) oder eines Abstichlochs (Englisch tap hole oder tapping hole) oder einer Kombination derselben wie einem Siphonabstich (Englisch submerged tap hole) haben. Es gibt verschiedene Bauformen von ELBOs mit Abstichlöchern, wie z.B. ELBOs mit einem zentrischen Bodenabstich (Englisch centric bottom tapping =CBT), mit einem seitlichen Bodenabstich (Englisch offset bottom tapping = OBT), oder mit einen exzentrischen Bodenabstich (Englisch excentric bottom tapping = EBT). Bei einem ELBO mit OBT ist das Ofenuntergefäß kreisrund und das Abstichloch gegenüber dem Mittelpunkt versetzt angeordnet. Bei einem ELBO mit EBT weist das Ofenuntergefäß einen Erker auf, in dem das Abstichloch angeordnet ist.

Die verschiedenen Bauformen unterscheiden sich z.B. in der Art und Weise, wie sie betrieben werden können. Je nach Bauform ist ein Betrieb mit oder ohne Sumpf (Sumpf = im Gefäß verbleibende flüssige Schmelze nach einem Abstich) möglich. Es gibt Unterschiede in den für einen Abstich nötigen Kippwinkeln und der daraus resultierenden Konstruktion, Unterschiede in den notwendigen Kabellängen für die Stromzufuhr und daher in der Reaktanz, Unterschiede in der Möglichkeit das Mitlaufen von Schlacke zu verringern, usw.

Während eines Schmelzvorgangs ist das Metallbad in einem metallurgischen Ofen von einer Schicht aus Schlacke (Englisch slag) bedeckt. Schlacke besteht aus geschmolzenen, in der Regel nicht-metallischen Stoffen, die leichter als das geschmolzene Metall des Metallbads sind und daher auf dem Metallbad schwimmen. In dieser Anmeldung erfasst der Begriff Schlacke auch feste Stoffe, die leichter als das geschmolzene Metall des Metallbads sind und daher auf dem Metallbad schwimmen, obwohl diese festen Stoffe in der Metallurgie streng genommen als Krätze (Englisch dross) bezeichnet werden. Eine Schlackenschicht hat unter anderem die Funktion einer thermischen Abschirmung (Isolierung) des Metallbads.

Einerseits ist beim Abstich ist eine Vermischung der Schlacke und des geschmolzenen Metalls zu vermeiden. Andererseits ist die Schlacke selbst ist ein wertvoller Rohstoff. Die Schlacke wird daher vor dem Abstich weitgehend von der Oberseite des Metallbads entfernt. Dieser Vorgang wird als Abschlacken (Englisch deslagging) bezeichnet. Dieses Abschlacken erfolgt in der Regel durch eine Schlackenöffnung bzw. einen Schlackentunnel in einer Seitenwand des Ofengefäßes. Die Schlackenöffnung befindet sich bei einem ELBO üblicherweise an einer anderen Seite des Ofengefäßes als der Abstich, meistens auf der entgegengesetzten Seite. Zum Abschlacken wird der ELBO in Richtung der Schlackenöffnung gekippt. Der Verlust von Metall aus dem Metallbad muss dabei so weit wie möglich vermieden werden. Überlicherweise werden bei einem ELBO 80% bis 95% der Schlacke vor dem Abstich abgeschlackt.

Die Schlackenöffnung bzw. der Schlackentunnel in der Seitenwand des Ofengefäßes wird während der meisten Zeit eines Schmelzvorgangs mit einer Schlackentür (Englisch slag door) verschlossen. Das Verschließen hat mehrere Wirkungen, u.a. der Energieeinsparung, des Verhinderns eines Verlustes an Metall und/oder Schlacke und des Schutzes des Bedienungspersonals. Schlackentüranordnungen zum Verschließen des Schlackentunnels eines metallurgischen Ofens sind im Stand der Technik bekannt.

Aus der WO 2007/147248 A1 (Familienmitglieder US 8,124,004 und EP 2 044 377 B1) ist eine Schlackentüranordnung mit drei Türteilen bekannt. Ein erster oberer Teil der Schlackentüranordnung ist um eine horizontale Achse, die außerhalb des Ofengefäßes und oberhalb des Schlackentunnels befindlich ist, zwischen einer Schließposition im Schlackentunnel und einer Öffnungsposition außerhalb und oberhalb des Schlackentunnels verschwenkbar. Ein zweiter und ein dritter unterer Teil der Schlackentüranordnung sind um jeweils eine vertikale Achse, die außerhalb des Ofengefäßes und seitlich rechts bzw. links neben dem Schlackentunnel befindlich sind, zwischen einer Schließposition im Schlackentunnel und einer Öffnungsposition außerhalb und seitlich rechts bzw. links des Schlackentunnels verschwenkbar. Bei der Schwenkbewegung des zweiten und des dritten Teils der Schlackentüranordnung von ihrer Öffnungsposition in ihre Schließposition werden diese von außerhalb des Schlackentunnels in das Innere des Schlackentunnels entlang des Bodens des Schlackentunnels bzw. der Schlackenöffnung bewegt. Eventuell auf dem Boden des Schlackentunnels befindliche Objekte wie Schlackereste werden dabei in den Schlackentunnel geschoben. Ein Reinigen des Bodens des Schlackentunnels von Schlackeresten erfolgt mittels einer Schwenkbewegung von außerhalb des Ofens in den Schlackentunnel.

Aus der WO 2010/094584 A1 (Familienmitglieder US 8,758,674 und EP 2 489 971 B1) ist eine Schlackentüranordnung mit zwei Türteilen bekannt. Ein erster oberer Teil und ein zweiter unterer Teil der Schlackentüranordnung sind außerhalb des Ofengefäßes linear zwischen einer Schließposition und einer Öffnungsposition außerhalb und oberhalb der Schlackenöffnung verschiebbar. Der zweite untere Teil der Schlackentüranordnung ist in der Schließposition linear entlang des Bodens der Schlackenöffnung und des Schlackentunnels bis in den Ofen bewegbar. Auf dem Boden der Schlackenöffnung und des Schlackentunnels befindliche Objekte wie Schlackereste werden dabei durch den Schlackentunnel in den Ofen geschoben. Ein Reinigen des Bodens des Schlackentunnels von Schlackeresten erfolgt mittels einer Linearbewegung von außerhalb des Ofens durch den Schlackentunnel in den Ofen.

Aus der WO 2011/115919 A1 (Familienmitglieder US 8,206,642 und EP 2 547 797 B1) ist eine Schlackentüranordnung bekannt, bei der eine Schlackentüreinheit um eine horizontale Achse, die außerhalb des Ofengefäßes und oberhalb des Schlackentunnels befindlich ist, zwischen einer Schließposition im Schlackentunnel und einer Öffnungsposition außerhalb und oberhalb des Schlackentunnels verschwenkbar ist. Auf dem Boden der Schlackenöffnung und des Schlackentunnels befindliche Objekte wie Schlackereste werden dabei in den Schlackentunnel und eventuell in den Ofen geschoben. Ein Reinigen des Bodens des Schlackentunnels von Schlackeresten mittels einer Schwenkbewegung von außerhalb des Ofens in den Schlackentunnel.

Aus der EP 2 834 581 A1 (Familienmitglied US 2015/0055673 A1) ist eine Schlackentüranordnung nach dem Oberbegriff des Anspruchs 1 bekannt, bei der die Schlackentür den Schlackentunnel von außen verschließt und der Schlackentürheber an dem Ofengefäß und der Schlackentürschwenker an dem Schlackentürheber befestigt ist. Die ES 2 568 519 A1 und die US2001/0048187 A1 offenbaren weitere andere Schlackentüranordnungen.

Aufgabe der Erfindung ist es, eine verbesserte Schlackentüranordnung für einen metallurgischen Ofen und ein verbessertes Verfahren zur Reinigung der Schlackenöffnung eines metallurgischen Ofens anzugeben.

Diese Aufgabe wird gelöst durch eine Schlackentüranordnung nach Anspruch 1 oder einen metallurgischen Ofen nach Anspruch 9 oder ein Verfahren nach Anspruch 12. Weiterbildungen der Erfindung sind in den abhängigen Ansprüchen angegeben.

Die Schlackentüranordnung nach Anspruch 1 ermöglicht eine zuverlässige Abdichtung der Schlackenöffnung bzw. des Schlackentunnels eines metallurgischen Ofens während des Schmelzvorgangs kombiniert mit einer verbesserten Reinigung der Schlackenöffnung bzw. des Schlackentunnels durch eine Reinigungsbewegung der Schlackentür ausgehend von einer Position in dem Schlackentunnel nahe der Innenseite des Ofens in Richtung der Außenseite des Ofens aus dem Schlackentunnel heraus.

Das Verfahren nach Anspruch 12 ermöglicht eine verbesserte Reinigung der Schlackenöffnung bzw. des Schlackentunnels eines metallurgischen Ofens durch eine Reinigungsbewegung der Schlackentür ausgehend von einer Position in dem Schlackentunnel nahe der Innenseite des Ofens in Richtung der Außenseite des Ofens aus dem Schlackentunnel heraus. Je nach Verschmutzung der Schlackenöffnung bzw. des Schlackentunnels des metallurgischen Ofens kann diese Bewegung mehrmals in unterschiedlichen Abständen von dem Boden der Schlackenöffnung bzw. des Schlackentunnels ausgeführt werden.

Die Schwenkbewegung der Schlackentür um eine horizontale Schwenkachse und die lineare Bewegung der Schlackentür in einer zu der horizontalen Schwenkachse senkrechten Richtung, die voneinander unabhängig sind, ermöglichen eine Steuerung der Reinigungsbewegnung der Schlackentür ausgehend von einer Position in dem Schlackentunnel nahe der Innenseite des Ofens in Richtung der Außenseite des Ofens aus dem Schlackentunnel heraus in steuerbar unterschiedlichen Abständen von dem Boden der Schlackenöffnung bzw. des Schlackentunnels.

Weitere Merkmale und Zweckmäßigkeiten ergeben sich aus der Beschreibung von Ausführungsbeispielen anhand der Figuren. Von den Figuren zeigen:
- Fig. 1: eine Teilansicht eines ELBO mit einer ersten Ausführungsform einer Schlackentüranordnung in einer seitlichen perspektivischen Ansicht von links vorne außerhalb des ELBO mit geöffneter Schlackentür;
- Fig. 2: eine Teilansicht des ELBO mit der ersten Ausführungsform einer Schlackentüranordnung aus Fig. 1 in einer seitlichen perspektivischen Ansicht von rechts vorne außerhalb des ELBO mit geschlossener Schlackentür;
- Fig. 3: Teilansichten des ELBO in waagerechter Stellung mit der ersten Ausführungsform einer Schlackentüranordnung aus Fig. 2 in a) in einer Draufsicht, in b) in einer Schnittansicht entlang der Linie A-A aus a), und in c) in einer seitlichen Ansicht entlang der Linie B-B aus a);
- Fig. 4: Teilansichten des ELBO mit der ersten Ausführungsform einer Schlackentüranordnung aus Fig. 2 in Schnittansichten entlang der Linie A-A aus Fig. 3a) in a) mit geschlossener Schlackentür in einer nach unten bewegten und nach innen geschwenkter Stellung, in b) mit der Schlackentür in einer nach unten bewegten und nach außen geschwenkten Stellung, und in c) mit der Schlackentür in einer nach oben bewegten und nach außen geschwenkten Stellung;
- Fig. 5: Teilansichten des ELBO in zum Abschlacken gekippter Stellung mit der ersten Ausführungsform einer Schlackentüranordnung in a) in einer Draufsicht, in b) in einer seitlichen Ansicht entlang der Linie C-C aus a), und in c) in einer Ansicht der Schlackentürseite entlang der Linie D-D aus b), und in d) eine schematische Darstellung einer Steuerungsvorrichtung;
- Fig. 6: eine zweite Ausführungsform einer Schlackentüranordnung in einer seitlichen perspektivischen Ansicht von links vorne außerhalb eines ELBO in a) mit geschlossener Schlackentür und in b) mit geöffneter Schlackentür;
- Fig. 7: Teilansichten eines ELBO mit einer dritten Ausführungsform einer Schlackentüranordnung in sechs Schnittansichten entlang einer Linie, die der Linie A-A aus Fig. 3a) entspricht, die in a) bis f) verschiedene Stellungen in einem Bewegungsablauf der Schlackentür zur Reinigung der Schlackenöffnung zeigen; und
- Fig. 8: Ansichten eines herkömmlichen ELBO, in denen in a) Bestandteile des ELBO in einer Explosionsdarstellung, in b) der ELBO aus a) in einer Seitenansicht von der Schlackentürseite mit angehobenem Deckel und Elektroden, und in c) der ELBO aus a) in einer Draufsicht gezeigt sind.

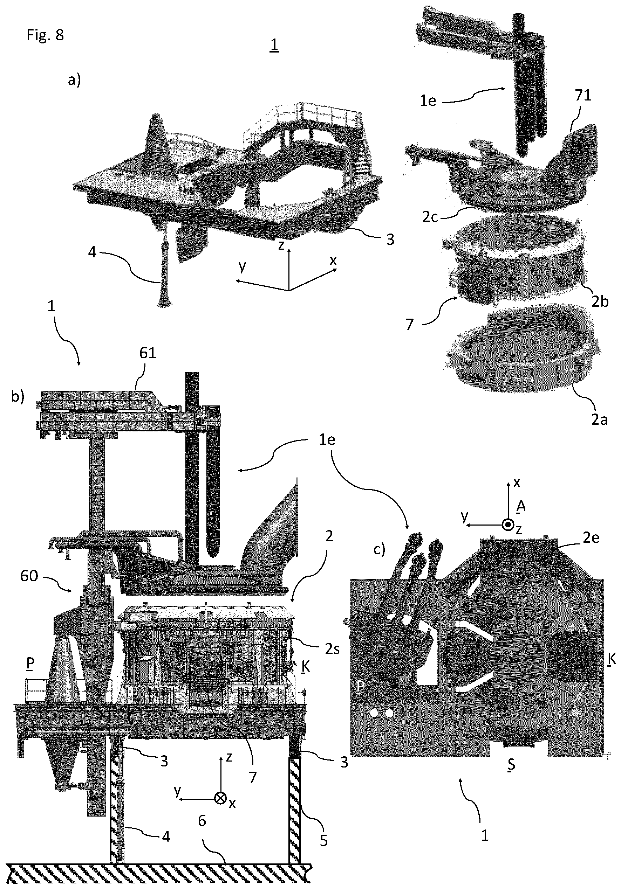

Fig. 8 zeigt in a) Bestandteile eines typischen herkömmlichen elektrischen Lichtbogenofens (ELBO) in einer Explosionsdarstellung, in b) den ELBO aus a) in einer Seitenansicht von der Schlackentürseite, und in c) den ELBO aus a) in einer Draufsicht.

Der ELBO 1 aus Fig. 8 weist ein Ofengefäß 2 mit einem Ofenuntergefäß 2a, einem Ofenobergefäß 2b und einem Ofendeckel 2c auf. Das Ofengefäß 2 ist über eine Ofenkippvorrichtung mit einer Ofenwiege 3 und einem Hydraulikzylinder 4 kippbar auf einem nur schematisch gezeigten Fundament 5 und damit auf dem Boden 6 gelagert. Bei dem ELBO 1 aus Fig. 8 ist eine Schlackentür 7 auf einer Seite in der Seitenwand 2s des Ofengefäßes 2 angeordnet. Diese Seite wird nachfolgend als Schlackentürseite S bezeichnet. Der ELBO 1 weist einen exzentrischem Bodenabstich (EBT) in einem Erker 2e des Ofenuntergefäß 2a auf einer der Schlackentürseite S entgegengesetzten Seite auf, die nachfolgend als Abstichseite A bezeichnet wird und die in Fig. 8 c) oben dargestellt ist.

Das Ofenuntergefäß 2a weist eine äußere Hülle auf, die mit feuerfestem Material (Zustellung) ausgekleidet ist. Der EBT weist ein nicht dargestelltes Abstichloch auf, das sich durch das Ofenuntergefäß 2a, also durch die äußere Hülle und die Zustellung erstreckt. Das Abstichloch ist während des Einschmelzens und vor dem Abstich mit einem Schieber (nicht gezeigt) an der Unterseite des Ofenuntergefäßes 2a verschlossen und mit einem feuerfesten Füllmaterial verfüllt.

In Fig. 8 c) ist ein Koordinatensystem x-y-z gezeigt. Die Richtung x zeigt bei dem ELBO in horizontaler Richtung von der Schlackentürseite S zur Abstichseite A. Die Richtung y zeigt in horizontaler Richtung von der Schlackentürseite S aus gesehen von rechts nach links, hier von der Seite K, auf der ein Abgaskrümmer 71 an dem Ofendeckel 2c angebracht ist, zu der Seite, auf der ein Portal 60 befindlich ist. Die Richtung z ist senkrecht zu x und y aus der Papierebene gerichtet und damit senkrecht zum Boden von unten nach oben.

Der Erker 10 steht in einer Draufsicht in x-Richtung über den Umfang des Ofenobergefäßes 2b vor.

Der dargestellte ELBO ist ein mit Wechselstrom betriebener ELBO und weist drei Elektroden 1e auf, die im Betrieb durch den Ofendeckel 2c in das Ofengefäß ragen. Die Elektroden 1e sind an Elektrodentragarmen 61 befestigt, die mit einem Portal (Hub- und Schwenkvorrichtung) 60 verbunden sind. In Fig. 8 b) ist der ELBO aus a) in einer Seitenansicht von der Schlackentürseite S in einer waagerechten Stellung gezeigt, in der Deckel 2c mittels des Portals 60 angehoben ist. Das Ofengefäß 2 ist in Fig. 8 b) und c) in einer waagerechten (nicht gekippten) Stellung gezeigt. In der Stellung in Fig. 8 b) sind die Elektroden 1e aus dem Deckel 2c herausgezogen Zum Abstechen und zum Abschlacken wird das Ofengefäß 2 mittels der Ofenkippvorrichtung 3, 4 um eine zur y-Achse parallele Kippachse gekippt.

Eine Schlackentüranordnung 10 nach den vorliegenden Lehren kann in herkömmlichen metallurgischen Öfen nachgerüstet werden oder in neuen metallurgischen Öfen vorgesehen werden. Eine Schlackentüranordnung 10 nach den vorliegenden Lehren kann z.B. in einem solchen herkömmlichen ELBO 1 aus Fig. 8 anstelle der Schlackentür 7 eingebaut werden. Die Schlackentüranordnung 10 kann in herkömmlichen ELBOs nachgerüstet werden oder in neuen ELBOs vorgesehen werden.

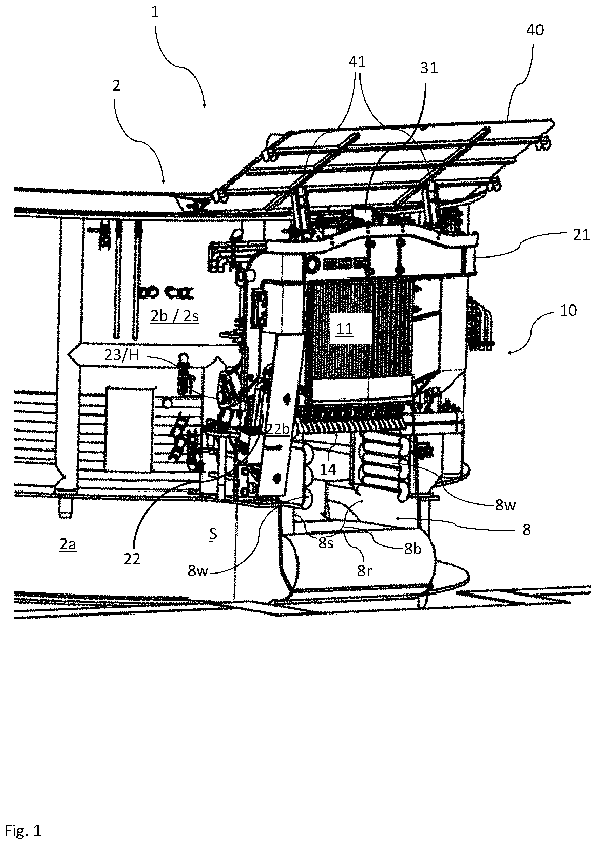

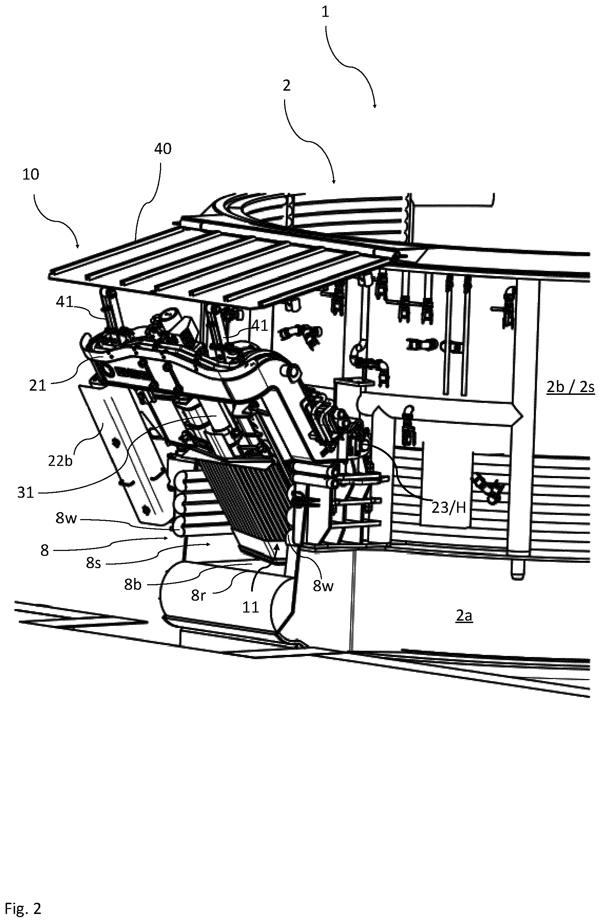

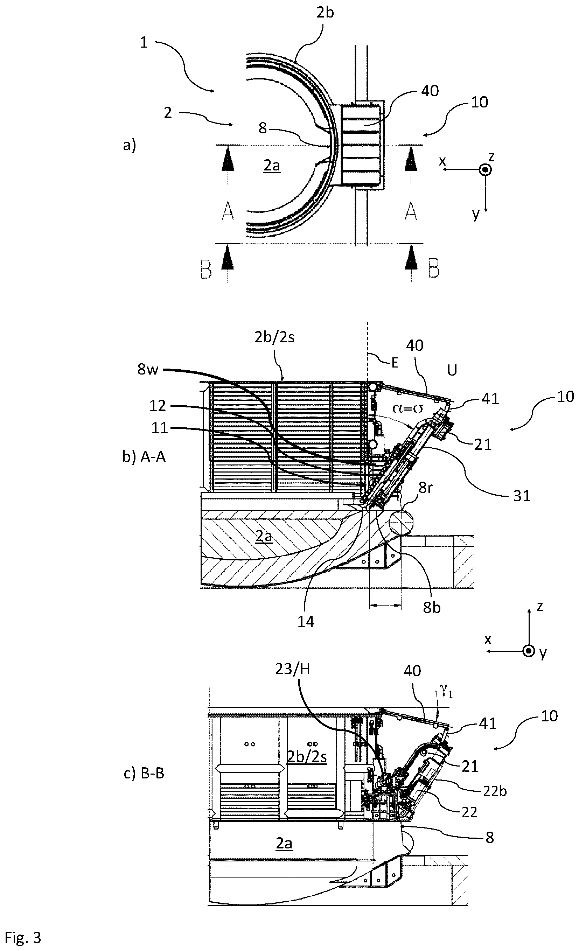

Eine erste Ausführungsform einer Schlackentüranordnung 10 wird unter Bezugnahme auf die Fig. 1 bis 5 beschrieben. Fig. 1 zeigt eine Teilansicht eines ELBO mit einer ersten Ausführungsform einer Schlackentüranordnung 10 in einer seitlichen perspektivischen Ansicht von links vorne außerhalb des ELBO mit geöffneter Schlackentür, und Fig. 2 zeigt eine Teilansicht des ELBO mit der ersten Ausführungsform einer Schlackentüranordnung aus Fig. 1 in einer seitlichen perspektivischen Ansicht von rechts vorne außerhalb des ELBO mit geschlossener Schlackentür. Die Fig. 3 bis 5 zeigen Teilansichten eines ELBO mit der ersten Ausführungsform der Schlackentüranordnung 10 verschiedenen Draufsichten, Schnittansichten und seitlichen Ansichten, die zuvor beschrieben wurden.

Der ELBO 1 aus Fig. 1 bis 5 weist den in Fig. 8 gezeigten und zu Fig. 8 beschriebenen Aufbau auf. Das Koordinatensystem x-y-z aus Fig. 8 und die entsprechenden Richtungen gelten auch für die Fig. 1 bis 7 und die Beschreibung der Erfindung. In Fig. 1 bis 5 sind ein Ofengefäß 2 mit einem Ofenuntergefäß 2a und einem Ofenobergefäß 2b gezeigt. Der Ofendeckel 2c, die Elektroden 1e, das Portal 60, die Ofenkippvorrichtung mit Ofenwiege 3 und Hydraulikzylinder 4, das Fundament 5, der Boden 6, der EBT, etc. aus Fig. 8 sind in den Teilansichten in Fig. 1 bis 5 nicht dargestellt. Bei dem ELBO 1 aus Fig. 1 bis 5 ist anstelle der Schlackentür aus Fig. 8 eine erste Ausführungsform einer Schlackentüranordnung 10 auf einer Seite in der Seitenwand 2s des Ofengefäßes 2 angeordnet. Diese Seite wird nachfolgend wiederum als Schlackentürseite S bezeichnet.

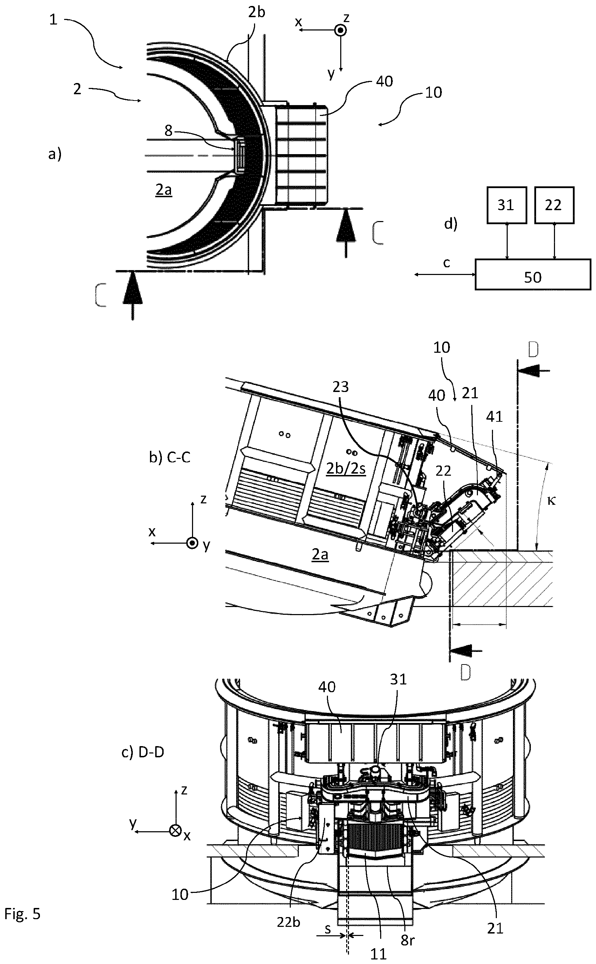

Das Ofengefäß 2 ist in Fig. 1 bis 4 in einer waagerechten (nicht gekippten) Stellung gezeigt. Zum Abstechen und zum Abschlacken kann das Ofengefäß 2 mittels der Ofenkippvorrichtung 3, 4 um eine zur y-Achse parallele Kippachse gekippt werden. Fig. 5 zeigt eine um den Winkel κ gekippte Stellung zum Abschlacken.

Das Ofengefäß 2 weist einen Schlackentunnel 8 mit einem rechteckigen Öffnungsquerschnitt auf, der seitlich in dem Ofengefäß 2 vorgesehen ist. Der Schlackentunnel 8 weist Seitenwände 8s, einen oberen Außenrand 8or und einen Boden 8b auf. Der obere Außenrand 8or verläuft in horizontaler Stellung des Ofengefäßes waagerecht und begrenzt den rechteckigen Öffnungsquerschnitt oben. Die Seitenwände 8s erstrecken sich jeweils in einem rechten Winkel zu dem oberen Außenrand 8or und dem Boden 8b.

Die Schlackentüranordnung 10 weist eine plattenartigen Schlackentür 11, deren Breite der Breite des rechteckigen Öffnungsquerschnitts des Schlackentunnels 8 mit einem Spiel s, das eine Bewegung der Schlackentür 11 in dem Schlackentunnel 8 erlaubt und in Fig. 5 c) schematisch dargestellt ist, entspricht, einen Schlackentürschwenker 20, der um eine horizontale Schwenkachse H schwenkbar ist, einen Schlackentürheber 30, an dem die Schlackentür 11 gelagert ist und der zur Bewegung der Schlackentür 11 zwischen einer ersten unteren minimalen Hebeposition U und einer zweiten oberen maximalen Hebeposition O senkrecht zu der horizontalen Schwenkachse H angepasst ist, auf.

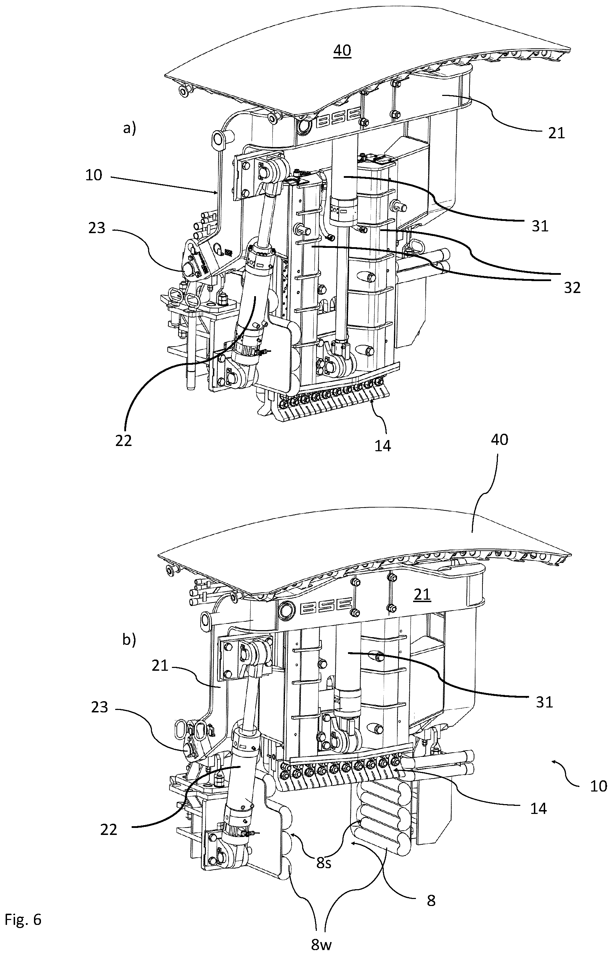

Der Schlackentürschwenker 20 weist eine Schwinge 21, die lateral beidseitig des Schlackentunnels 8 so an dem Ofengefäß 2 gelagert ist, dass sie um die horizontale Schwenkachse H schwenkbar ist, und einen hydraulischen Zylinder 22, der an einem Ende mit der Schwinge 21 verbunden ist und an seinem anderen Ende an dem Ofengefäß (2) gelagert ist, auf. Der hydraulische Zylinder 22 ist bei den gezeigten Ausführungsformen auf der von der Schlackentürseite S gesehen linken Seite der Schwinge 21 angeordnet. In Fig. 1 ist er durch eine Schutzplatte 22b weitgehend verdeckt, aber in den Fig. 3c) und 5 b) und bei der zweiten Ausführungsform in Fig. 6 ist der Zylinder 22 gut zu erkennen. Die Schwinge 21 ist bei der Ausführungsform als eine Art Joch ausgebildet, das über koaxiale horizontale Achsen 23 links und rechts an dem Ofengefäß 2 schwenkbar gelagert ist. Dadurch ist die Schwinge 21 durch Längenänderung des hydraulischen Zylinders 22 in verschiedene Schwenkpositionen relativ zu den Achsen 23 bewegbar.

Der Schlackentürheber 30 ist an dem Schlackentürschwenker 20 gelagert (befestigt). Der Schlackentürheber 30 weist einen hydraulischen Zylinder 31, der an einem Ende mit der Schlackentür 11 und an seinem anderen Ende mit dem Schlackentürschwenker 20 verbunden ist, und eine Linearführung 32, in der die Schlackentür 11 verschiebbar gelagert ist und die an dem Schlackentürschwenker 20 gelagert ist, auf.

Die beschriebene Anordnung ermöglicht, dass eine Schwenkbewegung der Schwinge 21 unabhängig von einer Linearbewegung der Schlackentür 11 in der Linearführung 32 ist.

Der Schlackentürschwenker 20 ist zum Schwenken der Schwinge 21 und damit der daran gelagerten Schlackentür 11 um die horizontale Schwenkachse H, die bei dieser Ausführungsform durch die koaxialen horizontalen Achsen 23 festgelegt wird, um einen Schwenkwinkelbereich σ zwischen einem ersten Schwenkwinkel α, der relativ zu einer vertikalen Ebene E durch die horizontale Schwenkachse H in Richtung des Ofengefäßes 2 liegt, und einem zweiten Schwenkwinkel β, der bei der vorliegenden Ausführungsform in der vertikalen Ebene E liegt und daher gleich 0° ist, schwenkbar. Bei der ersten Ausführungsform ist der Betrag des Schwenkwinkelbereich σ daher gleich dem des ersten Schwenkwinkels α.

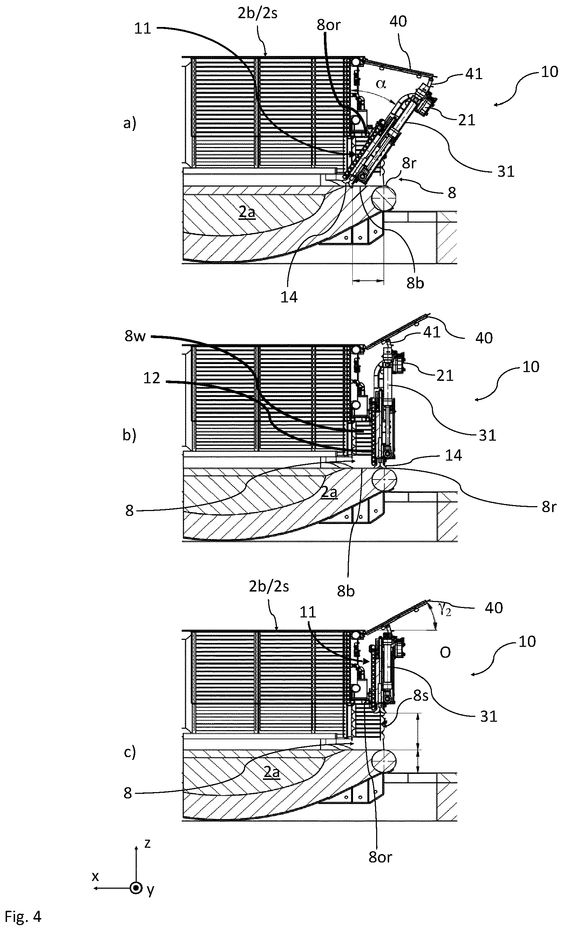

Die Schlackentüranordnung 10 ist so an dem Ofengefäß 2 angebracht, dass, in einer horizontal waagerechten Kippstellung des Ofengefäßes 2, die Ebene E durch die horizontale Schwenkachse H senkrecht zur Horizontalen ist. Die Gestaltung der Schlackentüranordnung 10 bewirkt, dass die Schlackentür 11 in einer um die horizontale Schwenkachse H um einen dritten Schwenkwinkel α', der dem ersten Schwenkwinkel α minus 0 bis 5° entspricht, geschwenkten Stellung des Schlackentürschwenkers 20 und in einer Stellung des Schlackentürhebers 30, in der die Schlackentür 11 in Richtung der ersten unteren minimalen Hebeposition U bis zur Berührung des Bodens 8b des Schlackentunnels 8 bewegt ist, schräg von außen oben in den Schlackentunnel 8 hineinragt und dessen Seitenwänden 8s mit dem Spiel s gegenüberliegt. Diese Stellung ist in Fig. 2 (und in Fig. 4 a)) gezeigt.

Bei der Schlackentüranordnung 10 ist der Schlackentunnel 8 vollständig zur Außenseite des Ofengefäßes 2 geöffnet, wenn die Schlackentür 11 in eine Stellung bewegt ist, die durch eine um die horizontale Schwenkachse H um einen vierten Schwenkwinkel β`, der dem zweiten Schwenkwinkel β minus 0 bis 5° entspricht, geschwenkte Stellung des Schlackentürschwenkers 20 und in eine Stellung des Schlackentürhebers 30, in der die Schlackentür 11 in die zweite obere maximale Hebeposition O bewegt ist, erzeugt wird. Diese Stellung ist in Fig. 1 (und in Fig. 4 c)) gezeigt.

Bei der Schlackentüranordnung 10 berührt der untere Rand der Schlackentür 11 den Boden 8b des Schlackentunnel 8, wenn die Schlackentür 11 in eine Stellung bewegt ist, die durch eine um die horizontale Schwenkachse H um den vierten Schwenkwinkel β`, der dem zweiten Schwenkwinkel β minus 0 bis 5° entspricht, geschwenkte Stellung des Schlackentürschwenkers 20 und eine Stellung des Schlackentürhebers 30, in der die Schlackentür 11 in Richtung der ersten unteren minimalen Hebeposition U bis zur Berührung des Bodens 8b des Schlackentunnels 8 bewegt ist, erzeugt wird. Diese Stellung ist in Fig. 4 b) gezeigt.

Ein Schlackenschieber 14 ist an der Schlackentür 11 an deren der horizontalen Schwenkachse H abgewandten Unterseite angebracht. Der Schlackenschieber 14, der in den Fig. 1, 3 b) und 4 gut zu erkennen ist, kommt in einer entsprechenden Stellung der Schlackentür 11 mit dem Boden 8b des Schlackentunnels in Kontakt.

Eine Schutzabdeckung 40 ist in senkrechter Richtung oberhalb der Schlackentür 11, des Schlackentürschwenkers 20 und des Schlackentürhebers 30 vorgesehen ist, deren Außenabmessungen in einer senkrechen Draufsicht die Schlackentür 11, den Schlackentürschwenker 20 und den Schlackentürheber 30 in jeder Schwenk- und Hebestellung derselben abdecken. Das ist in Fig. 3 a) gut zu erkennen. Die Schutzabdeckung dient unter anderem dazu, die Schlackentüranordnung 10 vor von oben herabfallenden Teilen zu schützen. Ein ELBO wird z.B. durch Chargieren von einzuschmelzendem Material wie Schrott von oben durch die obere Öffnung des Ofengefäßes 2 beladen. Dabei ist der Ofendeckel 2c zur Seite weggeschwenkt. Der Schrott wird dabei mittels eines Schrottkorbs über das Ofengefäß 2 bewegt. Dabei können Teile des Schrotts herunterfallen, die die Schlackentüranordnung 10 beschädigen könnten.

Bei der ersten Ausführungsform ist die plattenförmige Schutzabdeckung 40 an einem seitlichen Rand um eine horizontale Achse schwenkbar an dem oberen Rand des Ofengefäßes oder nahe an dem Rand gelagert. Die plattenförmigen Schutzabdeckung 40 ist außerdem mittels Verbindungsstreben 41 gelenkig an der Schwinge 21 gelagert. Bei der ersten Ausführungsform stehen Teile der Schlackentüranordnung 10 wie das obere Ende des hydraulischen Zylinders 31 in Höhenrichtung z bis zur Höhe des Ofenobergefäßes 2b oder darüber hinaus vor, wenn der Schlackentürschwenker 20 in der um den vierten Schwenkwinkel β`, der dem zweiten Schwenkwinkel β minus 0 bis 5° entspricht, geschwenkten Stellung ist (siehe Fig. 1, 4 b), c)). Dann muss auch die Schutzabdeckung 40 in dieser Stellung über die Höhe des Ofenobergefäßes 2b hinaus vorstehen. Wenn die Schutzabdeckung 40 fest installiert wäre und nicht schwenken könnte, würde diese Stellung das Chargieren mit dem Schrotkorb behindern, obwohl beim Chargieren der Schlackentunnel verschlossen ist und die Teile der Schlackentüranordnung 10 wie das obere Ende des hydraulischen Zylinders 31 in Höhenrichtung z gar nicht vorstehen würden (siehe Fig. 2, 3, 4 a)). Darum wird die Schutzabdeckung 40 über die Verbindungsstreben 41 zwischen den fünften und sechsten Schwenkwinkeln γ₁ und γ₂ relativ zur Horizontalen geschwenkt (siehe Fig. 3 c) und 4 c)). Diese Anordnung eignet sich insbesondere für Öfen mit niedriger Höhe der Seitenwände des Ofengefäßes 2.

Der Boden 8b des Schlackentunnels 8 ist in einer Draufsicht seitlich über Seitenwand 2s des Ofengefäßes 2 hinaus bis zu einem Bodenrand 8r verlängert. Dieser Rand 8r befindet sich oben auf einem Abschlussstück des Bodens des Schlackentunnels 8, das einem im Querschnitt senkrecht zur y-Richtung runden Querschnitt aufweist, so dass die Schlacke beim Abschlacken über dessen runde Oberfläche ablaufen kann.

Bei der Schlackentüranordnung 10 der ersten Ausführungsform ist die Länge des Bodens 8b in x-Richtung und damit die Lage des Randes 8r des Bodens 8b des Schlackentunnels 8 so gewählt, dass der untere Rand der Schlackentür 11 den Boden 8b des Schlackentunnel 8 mit dem Schlackenschieber 14 an dem Bodenrand 8r berührt, wenn die Schlackentür 11 in eine Stellung bewegt ist, die durch eine um die horizontale Schwenkachse H um den vierten Schwenkwinkel β`, der dem zweiten Schwenkwinkel β minus 0 bis 5° entspricht, geschwenkte Stellung des Schlackentürschwenkers 20 und in eine Stellung des Schlackentürhebers 30, in der die Schlackentür 11 in Richtung der ersten unteren minimalen Hebeposition U bis zur Berührung des Bodens 8b des Schlackentunnels 8 bewegt ist, erzeugt wird. Diese Stellung ist in Fig. 4 b) gezeigt.

Bei der Schlackentüranordnung 10 der ersten Ausführungsform sind an den Seitenwänden 8s des Schlackentunnels 8 jeweils wassergekühlte plattenartige Paneele 12 vorgesehen. Diese Paneele 12 sind jeweils nicht direkt vom Boden 8b ausgehend vorgesehen, sondern ab einer gewissen Höhe entfernt von dem Boden 8b. Vom Boden 8b bis zu dieser Höhe werden die Seitenwände 8s von Teilen des Ofengefäßes 2 gebildet, die entweder aus feuerfestem Material wie die Zustellung oder aus Brammen ausgebildet sind. Wassergekühlte plattenartige Paneele wären zu anfällig für mechanische Beschädigung durch gegebenenfalls mit der abgeschlackten Schlacke mitgeführte Schrottteile oder Bruchstücke der Zustellung oder ähnliches.

In Fig. 5 d) ist schematisch eine Steuerungsvorrichtung 50 gezeigt, die mit dem Schlackentürschwenker 20 bzw. dessen hydraulischem Zylinder 22 und dem Schlackentürheber 30 bzw. dessen hydraulischem Zylinder 31 verbunden ist und die angepasst ist zur Eingabe und Speicherung von Parametern zur Steuerung der Schwenkstellungen und Hebestellungen derselben. Der Doppelpfeile repräsentieren, dass die Steuerung 50 auch Daten, Messwerte, Positionswerte, etc. von dem Schlackentürschwenker 20 bzw. dessen hydraulischen Zylinder 22 und dem Schlackentürheber 30 bzw. dessen hydraulischen Zylinder 31 etc. empfangen kann. Der Doppelpfeil c zeigt, dass die Steuerung 50 mit weiteren Elementen des ELBO 1 wie Sensoren, einer übergeordneten Steuerung etc. verbunden sein kann.

Ein wassergekühltes, vorzugsweise plattenartiges Paneel 12 ist an der Schlackentür 11 auf der einem Innenraum des Ofengefäßes 2 zugewandten Seite angebracht, wie in Fig. 3 b) und in Fig. 4 gut zu erkennen ist.

Die Steuerungsvorrichtung 50, ist zur Steuerung der Schwenkstellungen des Schlackentürschwenkers 20 und der Hebestellungen des Schlackentürhebers 30 und damit zur Steuerung der Schlackentüranordnung 10 derart angepasst ist, dass die Schlackentür 11 zur Reinigung des Schlackentunnnels 8 nach einem Abschlacken eine Reinigungsbewegung aus einer Position in dem Schlackentunnel in Richtung der Außenseite des Ofengefäßes 2 aus dem Schlackentunnel heraus in einem wählbaren Abstand von dem oder in Kontakt mit dem Boden 8b des Schlackentunnels 8 ausführt. Das wird nachfolgend näher erläutert.

In Fig. 3 sind Teilansichten des ELBO in waagerechter Stellung mit der ersten Ausführungsform der Schlackentüranordnung in a) in einer Draufsicht, in b) in einer Schnittansicht entlang der Linie A-A aus a), und in c) in einer seitlichen Ansicht entlang der Linie B-B aus a) gezeigt, und Fig. 5 sind Teilansichten des ELBO in einer zum Abschlacken um den Kippwinkel κ gegenüber der Horizontalen gekippten Stellung mit der ersten Ausführungsform der Schlackentüranordnung in a) in einer Draufsicht, in b) in einer seitlichen Ansicht entlang der Linie C-C aus a), und in c) in einer Ansicht der Schlackentürseite entlang der Linie D-D aus b).

In Fig. 5 ist allerdings nicht die Stellung der Schlackentür 11 während des Abschlackens dargestellt, sondern nach einem Abschlacken und einem anschließenden Bewegen der Schlackentür in die Ausgangstellung einer Reinigungsbewegung. Beim Abschlacken ist die Schlackentür 11 relativ zu dem Ofengefäß 2 in der in Fig. 1 oder Fig. 4 c) gezeigten Stellung, in der der Schlackentunnel vollständig geöffnet ist. Nach dem Abschlacken wird die Schlackentür 11 z.B. in eine Stellung relativ zu dem Ofengefäß 2 bewegt, die in Fig. 3 und 5 gezeigt ist. Dazu wird zunächst die Schwenkstellung des Schlackentürschwenkers 20 in die in den Fig. 3 und 5 gezeigte Stellung gebracht, aber ohne die Hebestellung des Schlackentürhebers 30 gegenüber der in Fig. 1 oder Fig. 4 c) gezeigten Stellung zu verändern. Erst danach wird die Hebestellung des Schlackentürhebers 30 aus der in Fig. 1 oder Fig. 4 c) gezeigten Stellung in die in den Fig. 3 und 5 gezeigte Stellung gebracht. D.h., zunächst wird der Schwenkwinkel vom den vierten Schwenkwinkel β`, der gleich dem zweiten Schwenkwinkel β sein kann, zu dem dritten Schwenkwinkel α', der gleich dem ersten Schwenkwinkel α sein kann, geändert, bevor die Hebestellung von der zweiten oberen maximalen Hebeposition O in Richtung der ersten unteren minimalen Hebeposition U bis zur Berührung des Bodens 8b des Schlackentunnels 8 (oder dem Erreichen eines festgelegten maximalen Widerstands gegen die Bewegung in einem Abstand von dem Boden 8b) bewegt wird. Dadurch wird vermieden, dass restliche Schlacke und andere Rückstände auf dem Boden 8b und in dem Schlackenkanal 8 durch eine Bewegung der Schlackentür aus der Stellung in Fig. 4 c) entlang des Bodens 8b von außen nach innen geschoben werden.

Die Schwenkstellung des Schlackentürschwenkers 20 und die Hebestellung des Schlackentürhebers 30 und damit die Stellung der Schlackentür 11 relativ zu dem Ofengefäß 2 und zu dem Schlackentunnel 8 und dessen Boden 8b sind a in Fig. 3 und Fig. 5 a) bis c) identisch und entsprechen der Stellung aus Fig. 2 und Fig. 4a). In dieser Stellung ragt die Schlackentür 11 in einer um die horizontale Schwenkachse H um einen dritten Schwenkwinkel α', der dem ersten Schwenkwinkel α minus 0 bis 5° entspricht, geschwenkten Stellung des Schlackentürschwenkers 20 und in einer Stellung des Schlackentürhebers 30, in der die Schlackentür 11 in Richtung der ersten unteren minimalen Hebeposition U bis zur Berührung des Bodens 8b des Schlackentunnels 8 bewegt ist, schräg von außen oben in den Schlackentunnel 8 hinein und liegt dessen Seitenwänden 8s mit dem Spiel s gegenüber. Aus dieser Stellung in Fig. 4 a) kann die Schlackentür durch entsprechende Steuerung der Schwenkstellung des Schlackentürschwenkers 20 und der Hebestellung des Schlackentürhebers 30 in die Stellung in Fig. 4 b) bewegt werden, und zwar so, dass der Schlackenschieber 14 entlang des Bodens 8b bis zu dem Bodenrand 8r bewegt wird. Durch eine solche Bewegung werden restliche Schlacke und andere Rückstände, die nach dem Abschlacken am Boden 8b und in den Schlackenkanal 8 verblieben sind, in einer Richtung von innerhalb des Schlackenkanals nahe dem Inneren des Ofengefäßes 2 nach außen aus dem Schlackenkanal 8 geschoben, also in einer der x-Richtung entgegengesetzten Richtung.

Bei dem Bewegen der Schlackentür wird die aufgewandte Kraft direkt durch Messwertaufnehmer oder indirekt durch Auswertung von Parametern der Stellglieder gemessen. Bei Erreichen eines vorbestimmten ersten Grenzwerts der gemessenen Kraft wird die Bewegung der Schlackentür 11 in Richtung der ersten unteren minimalen Hebeposition U gestoppt. Wenn die restliche Schlacke und anderen Rückstände zu dick sind, würde ein weiteres Bewegen der Schlackentür 11 in Richtung Boden 8b eventuell die Anlage beschädigen und/oder das Herausschieben der restlichen Schlacke und anderen Rückstände wäre nicht auf einmal möglich. Darum wird dann in dem entsprechenden Abstand von dem Boden 8b die Bewegung der Schlackentür 11 von innen nach außen durchgeführt. Danach werden die Bewegungsabläufe wiederholt. Dabei ist zu erwarten, dass bei dem erneuten Bewegen der Schlackentür aus der Stellung in Fig. 4c) in die Stellung in Fig. 4a) der vorbestimmte erste Grenzwert der gemessenen Kraft erst näher an dem Boden 8b oder bei Kontakt mit dem Boden 8b erreicht wird. Wenn mit einer oder zwei Wiederholungen der Boden nicht erreicht wird, oder wenn ein vorbestimmter zweiter Grenzwert der gemessenen Kraft bei der Bewegung erreicht wird, wird der Vorgang durch die Steuerung abgebrochen und eine entsprechende Meldung ausgegeben. In diesem Fall muss Bedienungspersonal prüfen, ob die Rückstände anders entfernt werden müssen oder eine andere Störung vorliegt.

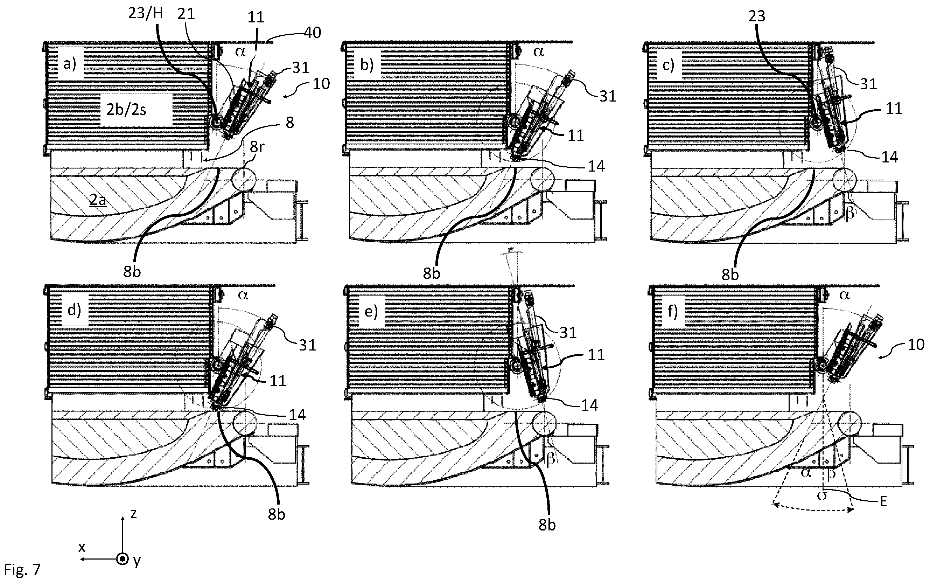

Bei der ersten Ausführungsform ist der Betrag des Schwenkwinkelbereich σ daher gleich dem des ersten Schwenkwinkels α. Die Konstruktion kann so variiert werden, dass der zweite Schwenkwinkel β relativ zu der vertikalen Ebene E durch die horizontale Schwenkachse H in Richtung weg von dem Ofengefäß 2 liegt, so dass der Betrag des Schwenkwinkelbereich σ daher gleich der Summe der Beträge des ersten Schwenkwinkels α und des zweiten Schwenkwinkels β (siehe Fig. 7 f)). Es ist auch eine Ausführungsform möglich, bei der der zweite Schwenkwinkel β relativ zu der vertikalen Ebene E durch die horizontale Schwenkachse H ebenfalls in Richtung des Ofengefäßes 2 liegt, so dass der der Betrag des Schwenkwinkelbereich σ gleich der Differenz der Beträge des ersten Schwenkwinkels α und des zweiten Schwenkwinkels β ist, aber eine solche Ausführungsform ist in den Figuren nicht gezeigt.

Die Schlackentür 11 ist bei der ersten Ausführungsform plattenartig ausgebildet, weil dadurch relativ einfach eine gute Abdichtung des Schlackentunnels 8 erreichbar ist. Grundsätzlich könnte die Schlackentür 11 auch eine gewölbte oder andere Struktur aufweisen, deren Außenkontur dann an die Querschnittsform des Schlackenkanals 8 zur Abdichtung desselben in der Schließstellung der Schlackentür 11 angepasst ist.

Fig. 6 zeigt eine zweite Ausführungsform einer Schlackentüranordnung in einer seitlichen perspektivischen Ansicht von links vorne außerhalb eines ELBO in a) mit geschlossener Schlackentür und in b) mit geöffneter Schlackentür. Die zweite Ausführungsform entspricht der ersten Ausführungsform bis auf die nachfolgend beschriebenen Unterschiede und die Beschreibung der übereinstimmenden Merkmale wird nicht wiederholt.

Bei der zweiten Ausführungsform einer Schlackentüranordnung 10 ist die Abdeckung 40 zwar auch plattenartig, aber nicht eben sondern leicht gewölbt. Die Abdeckung 40 wird auch in den in Fig. 6 gezeigten Stellungen, die den in Fig. 4 b) und c) gezeigten Stellungen entsprechen nicht gegenüber der Horizontalen geschwenkt. Ihre Stellung wird anders als bei der ersten Ausführungsform nicht geändert. Bei der Schlackentüranordnung 10 in Fig. 6 ist die Linearführung 32 gut zu erkennen. Bei der Schlackentüranordnung 10 in Fig. 6 ist hydraulische Zylinder 22 ebenfalls gut zu erkennen, da die Abdeckung 22b nicht vorgehsehen ist.

Fig. 7 zeigt Teilansichten eines ELBO mit einer dritten Ausführungsform einer Schlackentüranordnung in sechs Schnittansichten entlang einer Linie, die der Linie A-A aus Fig. 3a) entspricht, die in a) bis f) verschiedene Stellungen in einem Bewegungsablauf der Schlackentür 1 1zur Reinigung des Schlackentunnels 8 zeigen. Die dritte Ausführungsform entspricht der ersten Ausführungsform bis auf die nachfolgend beschriebenen Unterschiede und die Beschreibung der übereinstimmenden Merkmale wird nicht wiederholt.

Bei der dritten Ausführungsform einer Schlackentüranordnung 10 ist die Abdeckung 40 auch plattenartig, aber nicht beweglich sondern fest an der Oberkante des Ofengefäßes 2 befestigt. Ihre Stellung wird anders als bei der ersten Ausführungsform nicht geändert. Bei der dritten Ausführungsform ist der Schwenkbereich anders als bei der ersten und zweiten Ausführungsform. Es ist die Variante implementiert, bei der der zweite Schwenkwinkel β relativ zu der vertikalen Ebene E durch die horizontale Schwenkachse H in Richtung weg von dem Ofengefäß 2 liegt, so dass der Betrag des Schwenkwinkelbereichs σ gleich der Summe der Beträge des ersten Schwenkwinkels α und des zweiten Schwenkwinkels β.

Fig. 7 zeigt eine zweistufige Reinigung. Zunächst die Schwenkstellung des Schlackentürschwenkers 20 in die in den Fig. 7a) gezeigte Stellung gebracht, in der die Schwenkstellung um die horizontale Schwenkachse H um einen dritten Schwenkwinkel α', der dem ersten Schwenkwinkel α minus 0 bis 5° entspricht, geschwenkt ist, und die Hebestellung des Schlackentürhebers 30 in der der zweiten oberen maximalen Hebeposition O ist.

Danach wird die Hebestellung des Schlackentürhebers 30 aus der in Fig. 7 a) gezeigten Stellung in Richtung der ersten unteren minimalen Hebeposition U bewegt, bis entweder ein vorbestimmter Abstand erreicht ist oder der vorbestimmte erste Grenzwert der gemessenen Kraft erreicht wird (Fig. 7 b)).

Dann wird eine Schwenkbewegung um die Schwenkachse H ausgeführt, ohne die Hebestellung zu verändern. Dadurch wird der untere Rand der Schlackentür 11 mit dem Schlackenschieber 14 nicht parallel zu dem Boden 8b in einem bestimmten Abstand sondern in einer Bewegung auf einem Kreisabschnitt mit einem Mindestabstand bei der größten Annäherung bewegt bis der vierte Schwenkwinkel β`, der gleich dem zweiten Schwenkwinkel β sein kann, erreicht ist (Fig. 7 c)).

Dann werden die Bewegungen wiederholt. Zunächst wird ggfs. mit unveränderter Hebestellung oder mit in Richtung der zweiten oberen maximalen Hebeposition O veränderter Hebeposition eine Schwenkbewegung zurück zu der Schwenkstellung mit dem dritten Schwenkwinkel α', der dem ersten Schwenkwinkel α minus 0 bis 5° entspricht, ausgeführt. Danach wird die Hebestellung des Schlackentürhebers 30 in Richtung der ersten unteren minimalen Hebeposition U bewegt, bis entweder ein reduzierter vorbestimmter Abstand erreicht ist oder der vorbestimmte erste Grenzwert der gemessenen Kraft erreicht wird (Fig. 7 d)).

Dann wird eine Schwenkbewegung um die Schwenkachse H ausgeführt, ohne die Hebestellung zu verändern. Dadurch wird der untere Rand der Schlackentür 11 mit dem Schlackenschieber 14 nicht parallel zu dem Boden 8b in einem bestimmten Abstand sondern in einer Bewegung auf einem Kreisabschnitt mit einem Mindestabstand bei der größten Annäherung bewegt bis der vierte Schwenkwinkel β`, der gleich dem zweiten Schwenkwinkel β sein kann, erreicht ist (Fig. 7 e)). Dabei kann der Mindestabstand auch auf Null gesetzt sein.

Danach kann die Hebestellung wieder in Richtung der zweiten oberen maximalen Hebeposition O verändert werden, und z.B. eine visuelle Inspektion des Schlackentunnels per Kamera oder Augenschein vorgenommen werden.

Bei der Schlackentüranordnung beträgt der Winkelbereich σ zwischen dem ersten Schwenkwinkel α und dem zweiten Schwenkwinkel β zwischen 25° und 60°, vorzugsweise 25° oder 30° oder 35° oder 40° oder 41° oder 45° oder 50° oder 55° oder 60°. Der erste Schwenkwinkel α hat einen Betrag im Bereich von 25° bis 45°, vorzugsweise 25° bis 35°, vorzugsweise 26° bis 35° relativ zu der Ebene E durch die horizontale Schwenkachse H und beträgt vorzugsweise 25° oder 26° oder 35°. Der zweite Schwenkwinkel β hat einen Betrag im Bereich von 0° bis 25°, vorzugsweise 0° bis 20°, vorzugsweise 0° bis 15° relativ zu der Ebene E durch die horizontale Schwenkachse H und beträgt vorzugsweise 0° oder 5° oder 10° oder 15°.

Alle beschriebenen Reinigungsbewegungen sind mit allen Ausführungsformen implementierbar, da die Schwenk- und Linearbewegungen unabhängig voneinander sind und gesteuert werden können.

Die zu den Ausführungsformen beschriebenen Variationen und Abwandlungen sind jeweils auch bei allen anderen Ausführungsformen anwendbar.

Die Schlackentüranordnung ist zum Einsatz bei metallurgischen Öfen angepasst, insbesondere ELBOs mit Abstichmassen von 50 bis 200 t.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichen

1 metallurgischer Ofen, 1e Elektrode, 2 Ofengefäß, 2a Ofenuntergefäß, 2b Ofenobergefäß, 2c Ofendeckel, 2s Seitenwand, 3 Ofenwiege, 4 Hydraulikzylinder, 5 Fundament, 6 Boden, 7 Schlackentür, 8 Schlackentunnel, 8s Seitenwände, 8b Boden, 8r Bodenrand, 8or oberer Außenrand, 10 Schlackentüranordnung, 11 plattenartige Schlackentür, 12 wassergekühltes Panel, 14 Schlackenschieber, 20 Schlackentürschwenker, 21 Schwinge, 22 hydraulischer Zylinder, 23 Schwenkachse, 30 Schlackentürheber, 31 hydraulischer Hubzylinder, 32 Linearführung, 40 Schutzabdeckung, 41 Strebe, 50 Steuervorrichtung, 60 Portal, 61 Elektrodentragarm, 71 Abgaskrümmer, S Schlackentürseite, A Abstichseite, K Abgaskrümmerseite, P Portalseite, s Spiel, H horizontale Schwenkachse, U erste untere minimale Hebeposition, O zweite obere maximale Hebeposition, E vertikale Ebene, σ Schwenkwinkelbereich, α erster Schwenkwinkel, β zweiter Schwenkwinkel, α' dritter Schwenkwinkel, β' vierter Schwenkwinkel, γ₁ fünfter Schwenkwinkel, γ₂ sechster Schwenkwinkel, κ Kippwinkel

## Patentansprüche

1. Schlackentüranordnung (10) für einen metallurgischen Ofen (1), der ein Ofengefäß (2) mit einem Schlackentunnel (8) mit einem rechteckigen Öffnungsquerschnitt, der seitlich in dem Ofengefäß (2) vorgesehen ist, aufweist, die
eine vorzugsweise plattenartige Schlackentür (11),
einen Schlackentürschwenker (20), der um eine horizontale Schwenkachse (H) schwenkbar ist, und
einen Schlackentürheber (30), an dem die Schlackentür (11) gelagert ist und der zur Bewegung der Schlackentür (11) zwischen einer ersten unteren minimalen Hebeposition (U) und einer zweiten oberen maximalen Hebeposition (O) senkrecht zu der horizontale Schwenkachse (H) angepasst ist,
aufweist,
**dadurch gekennzeichnet, dass**
die Schlackentür (11) eine Breite aufweist, die der Breite des rechteckigen Öffnungsquerschnitts des Schlackentunnels (8) mit einem Spiel (s), das eine Bewegung der Schlackentür (11) in dem Schlackentunnel (8) erlaubt, entspricht,
der Schlackentürschwenker (20) zum Schwenken um die horizontale Schwenkachse (H) um einen Schwenkwinkelbereich (σ) zwischen einem ersten Schwenkwinkel (α), der relativ zu einer vertikalen Ebene (E) durch die horizontale Schwenkachse (H) in Richtung des Ofengefäßes liegt, und einem zweiten Schwenkwinkel (β), der in der vertikalen Ebene (E) liegt oder relativ zu der vertikalen Ebene (E) durch die horizontale Schwenkachse (H) in Richtung weg von dem Ofengefäß liegt, schwenkbar ist, und
der Schlackentürheber (30) an dem Schlackentürschwenker (20) gelagert ist,
so dass eine Schwenkbewegung der Schlackentür um die horizontale Schwenkachse und eine Hebebewegung der Schlackentür in der zu der horizontalen Schwenkachse senkrechten Richtung voneinander unabhängig sind.

2. Schlackentüranordnung nach Anspruch 1, bei der
ein wassergekühltes Panel (12) an der plattenartigen Schlackentür (11) auf der einem Innenraum des Ofengefäßes (2) zugewandten Seite angebracht ist.

3. Schlackentüranordnung nach Anspruch 1 oder 2, bei der
ein Schlackenschieber (14) an der plattenartigen Schlackentür (11) an deren der horizontalen Schwenkachse (H) abgewandten Unterseite angebracht ist.

4. Schlackentüranordnung nach einem der vorhergehenden Ansprüche, bei der
der Schlackentürschwenker (20) eine Schwinge (21), die dazu angepasst ist, lateral beidseitig des Schlackentunnels (8) so an dem Ofengefäß (2) gelagert zu sein, dass sie um die horizontale Schwenkachse (H) schwenkbar ist, und einen hydraulischen Zylinder (22), der an einem Ende mit der Schwinge (21) verbunden ist und an seinem anderen Ende dazu angepasst ist, an dem Ofengefäß (2) gelagert zu sein, aufweist.

5. Schlackentüranordnung nach einem der vorhergehenden Ansprüche, bei der
der Schlackentürheber (30) einen hydraulischer Hubzylinder (31) der an einem Ende mit der Schlackentür (11) und an seinem anderen Ende mit dem Schlackentürschwenker (20) verbunden ist, und eine Linearführung (32), in der die Schlackentür (11) verschiebbar gelagert ist und die an dem Schlackentürschwenker (20) gelagert ist, aufweist.

6. Schlackentüranordnung nach einem der vorhergehenden Ansprüche, bei der
eine Schutzabdeckung (40) in senkrechter Richtung oberhalb der Schlackentür (11), des Schlackentürschwenkers (20) und des Schlackentürhebers (30) vorgesehen ist, deren Außenabmessungen in einer senkrechen Draufsicht über die Schlackentür (11), den Schlackentürschwenker (20) und den Schlackentürheber (30) in jeder Schwenk- und Hebestellung derselben abdecken.

7. Schlackentüranordnung nach einem der vorhergehenden Ansprüche, bei der
der Winkelbereich (σ) zwischen dem ersten Schwenkwinkel (α) und dem zweiten Schwenkwinkel (β) zwischen 25° und 60°, vorzugsweise 25° oder 30° oder 35° oder 40° oder 41° oder 45° oder 50° oder 55° oder 60° beträgt,
der erste Schwenkwinkel (α) einen Betrag im Bereich von 25° bis 45°, vorzugsweise 25° bis 35°, vorzugsweise 26° bis 35° relativ zu der Ebene (E) durch die horizontale Schwenkachse (H) aufweist und vorzugsweise 25° oder 26° oder 35° beträgt, und
der zweiten Schwenkwinkel (β) einen Betrag im Bereich von 0° bis 25°, vorzugsweise 0° bis 20°, vorzugsweise 0° bis 15° relativ zu der Ebene (E) durch die horizontale Schwenkachse (H) aufweist und vorzugsweise 0° oder 5° oder 10° oder 15° beträgt.

8. Schlackentüranordnung nach einem der vorhergehenden Ansprüche, die
eine Steuervorrichtung (50), die mit dem Schlackentürschwenker (20) und dem Schlackentürheber (30) verbunden ist und die angepasst ist zur Eingabe und Speicherung von Parametern zur Steuerung der Schwenkstellungen und Hebestellungen derselben, aufweist und
angepasst ist zum Messen der beim Bewegen der Schlackentür aufgewandten Kraft, entweder direkt durch Messwertaufnehmer oder indirekt durch Auswertung von Parametern der Stellglieder, und zum Stoppen, bei Erreichen eines vorbestimmten ersten Grenzwerts der gemessenen Kraft, der Bewegung der Schlackentür (11) in Richtung der ersten unteren minimalen Hebeposition (U) und, wenn ein vorbestimmter zweiter Grenzwert der gemessenen Kraft bei der Bewegung der Schlackentür (11) erreicht wird, zum Abbrechen der Bewegung und zum Ausgeben einer entsprechende Meldung.

9. Metallurgischer Ofen (1), insbesondere elektrischer Lichtbogenofen, mit
einem Ofengefäß (2), das eine Seitenwand (2s) und einen Schlackentunnel (8), der seitlich in der Seitenwand (2s) des Ofengefäßes (2) mit einem rechteckigen Öffnungsquerschnitt vorgesehen ist und Seitenwände (8s), einen oberen Außenrand (8or) und einen Boden (8b) aufweist, aufweist,
einer Ofenkippvorrichtung mit Wiege (3), auf der das Ofengefäß (2) lagert, zum Kippen des Ofengefäßes relativ zu der Horizontalen eines Fundaments (7), auf dem der metallurgische Ofen steht, und
einer Schlackentüranordnung nach einem der Ansprüche 1 bis 8,
bei dem die Schlackentüranordnung so an dem Ofengefäß (2) angebracht ist,
dass, in einer horizontal waagerechten Kippstellung des Ofengefäßes (2), die Ebene (E) durch die horizontale Schwenkachse (H) senkrecht zur Horizontalen ist,
dass die horizontale Schwenkachse (H) außerhalb des Ofengefäßes (2) liegt, und
dass die Schlackentür (11) in einer um die horizontale Schwenkachse (H) um einen dritten Schwenkwinkel (α'), der dem ersten Schwenkwinkel (α) minus 0 bis 5° entspricht, geschwenkten Stellung des Schlackentürschwenkers (20) und in einer Stellung des Schlackentürhebers (30), in der die Schlackentür (11) in Richtung der ersten unteren minimalen Hebeposition (U) bis zur Berührung des Bodens (8b) des Schlackentunnels (8) bewegt ist, schräg von außen oben in den Schlackentunnel hineinragt und dessen Seitenwänden (8s) mit dem Spiel (s) gegenüberliegt.

10. Elektrischer Lichtbogenofen nach Anspruch 9, bei dem
der Boden (8b) des Schlackentunnels (8), in einer Draufsicht, seitlich über Seitenwand (2s) des Ofengefäßes (2) hinaus bis zu einem Bodenrand (8r) verlängert ist,
die Schlackentür (11) in einer um die horizontale Schwenkachse (H) um einen vierten Schwenkwinkel (β`), der dem zweiten Schwenkwinkel (β) minus 0 bis 5° entspricht, geschwenkten Stellung des Schlackentürschwenkers (20) und in einer Stellung des Schlackentürhebers (30), in der die Schlackentür (11) in Richtung der ersten unteren minimalen Hebeposition (U) bis zur Berührung des Bodens (8b) des Schlackentunnels (8) bewegt ist, den Boden an dem Bodenrand (8r) berührt.

11. Elektrischer Lichtbogenofen nach Anspruch 9 oder 10, bei dem
die Schlackentüranordnung (10) die Steuervorrichtung (50) nach Anspruch 8 aufweist, die zur Steuerung der Schwenkstellungen des Schlackentürschwenkers (20) und der Hebestellungen des Schlackentürhebers (30) derart angepasst ist, dass zur Reinigung des Schlackentunnnels (8) die Schlackentür (11) eine Reinigungsbewegung von einer Position in dem Schlackentunnel in Richtung der Außenseite des Ofens aus dem Schlackentunnel heraus entweder parallel zu dem Boden in einem wählbaren Abstand von dem Boden oder in Kontakt mit dem Boden (8b) des Schlackentunnels (8) oder
in einer Bewegung auf einem Kreisabschnitt mit einem Mindestabstand bei der größten Annäherung, welcher Mindestabstand auch auf Null gesetzt sein kann,
ausführt.

12. Verfahren zur Reinigung einer Schlackenöffnung eines metallurgischen Ofens (1), insbesondere eines elektrischen Lichtbogenofens, der ein Ofengefäß (2), das eine Seitenwand (2s), einen Schlackentunnel (8), der seitlich in der Seitenwand (2s) des Ofengefäßes (2) mit einem rechteckigen Öffnungsquerschnitt vorgesehen ist und Seitenwände (8s), einen oberen Außenrand (8or) und einen Boden (8b) aufweist, und eine Schlackentüranordnung nach einem der Ansprüche 1 bis 8 aufweist, deren horizontale Schwenkachse (H) außerhalb des Ofengefäßes (2) liegt, mit den Schritten:
a) Bewegen des Schlackentürschwenkers (20), nach einem Abschlacken, bei dem die Schlackentür (11) durch den Schlackentürheber (30) in die zweite obere maximale Hebeposition (O) oder nahe an diese bewegt ist, in eine um die horizontale Schwenkachse (H) um einen dritten Schwenkwinkel (α'), der dem ersten Schwenkwinkel (α) minus 0 bis 5° entspricht, geschwenkte Stellung;
b) Bewegen der Schlackentür (11) durch den Schlackentürheber (30) in Richtung der ersten unteren minimalen Hebeposition (U) bis zu einem vorbestimmten Abstand von dem Boden (8b) des Schlackentunnels (8), so dass die Schlackentür schräg von außen oben in den Schlackentunnel hineinragt und dessen Seitenwänden (8s) mit dem Spiel (s) gegenüberliegt;
c) Bewegen des Schlackentürschwenkers (20) um die horizontale Schwenkachse (H) in Richtung des zweiten Schwenkwinkels (β) bis zu einem vierten Schwenkwinkel (β`), der dem zweiten Schwenkwinkel (β) minus 0 bis 5° entspricht, entweder bei gleichzeitigem Bewegen der Schlackentür (11) durch den Schlackentürheber (30) zum Halten mindestens des vorbestimmten Abstands von dem Boden (8b) des Schlackentunnels (8), so dass die Schlackentür mindestens in dem vorbestimmten Abstand parallel zu und entlang des Bodens (8b) bewegt wird, oder in einer Bewegung auf einem Kreisabschnitt mit einem Mindestabstand bei der größten Annäherung; und
d) Bewegen des Schlackentürschwenkers (20) um die horizontale Schwenkachse (H) in Richtung des ersten Schwenkwinkels (α) in eine um den dritten Schwenkwinkel (α'), der dem ersten Schwenkwinkel (α) minus 0 bis 5° entspricht, geschwenkte Stellung mit in Richtung der zweiten oberen maximalen Hebeposition (O) bewegter Schlackentür (11), so dass die Schlackentür dabei in einem Abstand von dem Boden (8b), der größer als der vorbestimmte Abstand bzw. der Mindestabstand ist, bewegt wird; und
e) Bewegen der Schlackentür (11) durch den Schlackentürheber (30) in Richtung der ersten unteren minimalen Hebeposition (U) bis zur Berührung des Bodens (8b) des Schlackentunnels (8), so dass die Schlackentür schräg von außen oben in den Schlackentunnel hineinragt und dessen Seitenwänden (8s) mit dem Spiel (s) gegenüberliegt.

13. Verfahren nach Anspruch 12, bei dem
die Schritte a) bis c) vor dem Ausführen der Schritte d) und e), im Fall der Bewegung parallel zu dem Boden mit einem gegenüber dem vorherigen vorbestimmten Abstand reduzierten vorbestimmten Abstand von dem Boden (8b) des Schlackentunnels (8) und im Fall der Bewegung auf einem Kreisabschnitt mit einem gegenüber dem vorherigen Mindestabstand reduzierten Mindestabstand bei der größten Annäherung wiederholt werden.

14. Verfahren nach Anspruch 12 oder 13,
bei dem der vorbestimmte Abstand bzw. Mindestabstand oder der reduzierte vorbestimmte Abstand bzw. Mindestabstand auf Null gesetzt ist.

15. Verfahren nach einem der Ansprüche 12 bis 14, bei dem
die zum Bewegen der Schlackentür in den Schritten a) bis e) aufgewandte Kraft gemessen wird, und
in Schritt b) bei Erreichen eines vorbestimmten ersten Grenzwerts der gemessenen Kraft die Bewegung der Schlackentür (11) in Richtung der ersten unteren minimalen Hebeposition (U) gestoppt wird und der Abstand von dem Boden (8b) des Schlackentunnels (8) als der vorbestimmte Abstand oder Mindestabstand für den folgenden Schritt c) verwendet wird, und
in den Schritten a) bis e) bei Erreichen eines jeweils für jeden der Schritte individuell vorbestimmten zweiten Grenzwerts der gemessenen Kraft die Ausführung des Verfahrens unterbrochen wird.

## Claims

1. A slag door assembly (10) for a metallurgical furnace (1) comprising a furnace vessel (2) with a slag tunnel (8) having a rectangular opening cross-section, which is provided laterally in the furnace vessel (2), the slag door assembly (10) comprising
a preferably plate-shaped slag door (11),
a slag door pivoting device (20), which is pivotable about a horizontal pivot axis (H), and
a slag door lifter (30) on which the slag door (11) is mounted and which is configured to move the slag door (11) between a first lower minimum lifting position (U) and a second upper maximum lifting position (O) perpendicular to the horizontal pivot axis (H),
**characterized in that**
the slag door (11) comprises a width which corresponds to the width of the rectangular opening cross-section of the slag tunnel (8) with a clearance (s) which allows movement of the slag door (11) in the slag tunnel (8),
the slag door pivoting device (20) is pivotable for pivoting about the horizontal pivot axis (H) by a pivot angle range (σ) between a first pivot angle (α), which is located towards the furnace vessel relative to a vertical plane (E) through the horizontal pivot axis (H), and a second pivot angle (β), which is located in the vertical plane (E) or located in a direction away from the furnace vessel relative to the vertical plane (E) through the horizontal pivot axis (H), and
the slag door lifter (30) is mounted on the slag door pivoting device (20) such that a pivoting movement of the slag door about the horizontal pivot axis and a lifting movement of the slag door in the direction perpendicular to the horizontal pivot axis are independent of each other.

2. The slag door assembly according to claim 1, wherein
a water-cooled panel (12) is attached to the plate-shaped slag door (11) on the side facing an interior space of the furnace vessel (2).

3. The slag door assembly according to claim 1 or 2, wherein
a slag pusher (14) is attached to the plate-shaped slag door (11) on its underside facing away from the horizontal pivot axis (H).

4. The slag door assembly according to any one of the preceding claims, wherein
the slag door pivoting device (20) comprises a rocker arm (21), which is adapted to be laterally supported on both sides of the slag tunnel (8) on the furnace vessel (2) so as to be pivotable about the horizontal pivot axis (H), and a hydraulic cylinder (22) having one end connected to the rocker arm (21) and its other end configured to be supported on the furnace vessel (2).

5. The slag door assembly according to any one of the preceding claims, wherein
the slag door lifter (30) comprises a hydraulic lift cylinder (31) which is connected at one end to the slag door (11) and at its other end to the slag door pivoting device (20), and a linear guide (32) in which the slag door (11) is displaceably supported and which is supported on the slag door pivoting device (20).

6. The slag door assembly according to any one of the preceding claims, wherein
a protective cover (40) is provided in a vertical direction above the slag door (11), the slag door pivoting device (20) and the slag door lifter (30), the outer dimensions of which cover the slag door (11), the slag door pivoting device (20) and the slag door lifter (30) in a vertical plan view in each pivoting and lifting positions of the same.

7. The slag door assembly according to any one of the preceding claims, wherein
the angular range (σ) between the first pivot angle (α) and the second pivot angle (β) is between 25° and 60°, preferably 25° or 30° or 35° or 40° or 41° or 45° or 50° or 55° or 60°, the first pivot angle (α) comprises an amount in the range from 25° to 45°, preferably 25° to 35°, preferably 26° to 35° relative to the plane (E) through the horizontal pivot axis (H) and is preferably 25° or 26° or 35°, and
the second pivot angle (β) comprises an amount in the range from 0° to 25°, preferably 0° to 20°, preferably 0° to 15° relative to the plane (E) through the horizontal pivot axis (H) and is preferably 0° or 5° or 10° or 15°.

8. The slag door assembly according to any one of the preceding claims, comprising
a control device (50) which is connected to the slag door pivoting device (20) and the slag door lifter (30) and which is configured to input and store parameters for controlling the pivoting positions and lifting positions thereof, and
being configured to measure the force applied when moving the slag door, either directly by transducers or indirectly by evaluating parameters of the actuators, and, when a predetermined first limit value of the measured force is reached, to stop the movement of the slag door (11) in the direction of the first lower minimum lifting position (U) and, when a predetermined second limit value of the measured force is reached during the movement of the slag door (11), to stop the movement and to output a corresponding message.

9. A metallurgical furnace (1), in particular an electric arc furnace, comprising
a furnace vessel (2) which comprises a side wall (2s) and a slag tunnel (8) which is provided laterally in the side wall (2s) of the furnace vessel (2) with a rectangular opening cross-section and comprises side walls (8s), an upper outer edge (8or) and a bottom (8b),
a furnace tilting device with a cradle (3), on which the furnace vessel (2) is supported, for tilting the furnace vessel relative to the horizontal of a foundation (7) on which the metallurgical furnace stands, and
a slag door assembly according to any one of claims 1 to 8,
wherein the slag door assembly is attached to the furnace vessel (2) in such a way
that, in a horizontal tilting position of the furnace vessel (2), the plane (E) through the horizontal pivot axis (H) is perpendicular to the horizontal,
that the horizontal pivot axis (H) lies outside the furnace vessel (2), and
that the slag door (11), in a position of the slag door pivoting device (20) pivoted about the horizontal pivot axis (H) by a third pivot angle (α'), which corresponds to the first pivot angle (α) minus 0 to 5°, and in a position of the slag door lifter (30) in which the slag door (11) is moved in the direction of the first lower minimum lifting position (U) until it contacts the bottom (8b) of the slag tunnel (8), projects obliquely into the slag tunnel from the outside at the top and faces its side walls (8s) with the clearance (s).

10. The electric arc furnace according to claim 9, wherein
the bottom (8b) of the slag tunnel (8), in a plan view, is extended laterally beyond the side wall (2s) of the furnace vessel (2) to a bottom rim (8r),
the slag door (11) touches the bottom at the bottom rim (8r) in a position of the slag door pivoting device (20) pivoted about the horizontal pivot axis (H) by a fourth pivot angle (β'), which corresponds to the second pivot angle (β) minus 0 to 5°, and in a position of the slag door lifter (30), in which the slag door (11) is moved in the direction of the first lower minimum lifting position (U) until it touches the bottom (8b) of the slag tunnel (8).

11. The electric arc furnace according to claim 9 or 10, wherein
the slag door assembly (10) comprises the control device (50) according to claim 8, which is configured to control the pivoting positions of the slag door pivoting device (20) and the lifting positions of the slag door lifter (30) in such a way that, for cleaning the slag tunnel (8), the slag door (11) performs a cleaning movement from a position in the slag tunnel towards the outside of the furnace out of the slag tunnel either
parallel to the bottom at a selectable distance from the bottom or in contact with the bottom (8b) of the slag tunnel (8) or
in a movement on a circular section with a minimum distance at the closest approach, which minimum distance can also be set to zero.

12. A method for cleaning a slag opening of a metallurgical furnace (1), in particular of an electric arc furnace, comprising
a furnace vessel (2) having a side wall (2s), a slag tunnel (8), which is provided laterally in the side wall (2s) of the furnace vessel (2) with a rectangular opening cross-section, and comprises side walls (8s), an upper outer edge (8or) and a bottom (8b), and
a slag door assembly according to any one of claims 1 to 8, the horizontal pivot axis (H) of which is located outside the furnace vessel (2), comprising the steps of
a) moving the slag door pivoting device (20), after a deslagging in which the slag door (11) is moved by the slag door lifter (30) to the second upper maximum lifting position (O) or close thereto, to a position pivoted about the horizontal pivot axis (H) by a third pivot angle (α') which corresponds to the first pivot angle (α) minus 0 to 5°;
b) moving the slag door (11) by the slag door lifter (30) in the direction of the first lower minimum lifting position (U) to a predetermined distance from the bottom (8b) of the slag tunnel (8), so that the slag door projects obliquely into the slag tunnel from the outside at the top and faces its side walls (8s) with the clearance (s);
c) moving the slag door pivoting device (20) about the horizontal pivot axis (H) in the direction of the second pivot angle (β) to a fourth pivot angle (β'), which corresponds to the second pivot angle (β) minus 0 to 5°, either with simultaneous moving of the slag door (11) by the slag door lifter (30) to maintain at least the predetermined distance from the bottom (8b) of the slag tunnel (8), so that the slag door is moved at least at the predetermined distance parallel to and along the bottom (8b), or in a movement on a circular section with a minimum distance at the closest approach; and
d) moving the slag door pivoting device (20) about the horizontal pivot axis (H) in the direction of the first pivot angle (α) to a position pivoted by the third pivot angle (α'), which corresponds to the first pivot angle (α) minus 0 to 5°, with the slag door (11) moved in the direction of the second upper maximum lifting position (O), so that the slag door is thereby moved at a distance from the bottom (8b) which is greater than the predetermined distance or the minimum distance, resp.; and
e) moving the slag door (11) by the slag door lifter (30) in the direction of the first lower minimum lifting position (U) until it touches the bottom (8b) of the slag tunnel (8), so that the slag door projects obliquely into the slag tunnel from the outside at the top and faces its side walls (8s) with the clearance (s).

13. The method according to claim 12, wherein
steps a) to c) are repeated before carrying out steps d) and e), in the case of movement parallel to the bottom at a predetermined distance from the bottom (8b) of the slag tunnel (8) which is reduced compared with the previous predetermined distance, and in the case of movement on a circular section at a minimum distance, which is reduced compared with the previous minimum distance, at the closest approach.

14. The method according to claim 12 or 13, wherein
the predetermined distance or minimum distance or the reduced predetermined distance or minimum distance is set to zero.

15. The method according to any one of claims 12 to 14, wherein
the force applied to move the slag door in steps a) to e) is measured, and
in step b), when a predetermined first limit value of the measured force is reached, the movement of the slag door (11) towards the first lower minimum lifting position (U) is stopped and the distance from the bottom (8b) of the slag tunnel (8) is used as the predetermined distance or minimum distance for the following step c), and
in steps a) to e), the execution of the method is interrupted when a second limit value of the measured force, which is individually predetermined for each of the steps, is reached.

## Revendications

1. Dispositif de porte de scories (10) pour un four métallurgique (1), qui comprend une cuve de four (2) avec un tunnel de scories (8) ayant une section d'ouverture rectangulaire, qui est prévue latéralement dans la cuve de four (2), comprenant
une porte de scories (11), de préférence de type plaque,
un pivot de porte de scories (20), qui peut pivoter autour d'un axe de pivotement horizontal (H), et
un élévateur de porte de scories (30), sur lequel la porte de scories (11) est montée et qui est adapté pour déplacer la porte de scories (11) entre une première position de levage minimale inférieure (U) et une deuxième position de levage maximale supérieure (O) perpendiculairement à l'axe de pivotement horizontal (H),
**caractérisé en ce que**
la porte de scories (11) a une largeur qui correspond à la largeur de la section d'ouverture rectangulaire du tunnel de scories (8) avec un jeu (s), qui permet un mouvement de la porte de scories (11) dans le tunnel de scories (8),
le pivot de porte de scories (20) est pivotable pour pivoter autour de l'axe de pivotement horizontal (H) sur une plage d'angles de pivotement (σ) entre un premier angle de pivotement (α), qui est situé par rapport à un plan vertical (E) à travers l'axe de pivotement horizontal (H) en direction de la cuve de four, et un deuxième angle de pivotement (β), qui est situé dans le plan vertical (E) ou, par rapport au plan vertical (E), à travers l'axe de pivotement horizontal (H) en direction opposée à celle de la cuve de four, et
l'élévateur de porte de scories (30) est monté sur le pivot de porte de scories (20),
de sorte qu'un mouvement de pivotement de la porte de scories autour de l'axe de pivotement horizontal et un mouvement de levage de la porte de scories dans la direction perpendiculaire à l'axe de pivotement horizontal sont indépendants l'un de l'autre.

2. Dispositif de porte de scories selon la revendication 1, dans lequel
un panneau refroidi par eau (12) est fixé à la porte de scories de type plaque (11) sur le côté faisant face à l'intérieur de la cuve de four (2).

3. Dispositif de porte de scories selon la revendication 1 ou 2, dans lequel
un poussoir à scories (14) est fixé à la porte de scories de type plaque (11) sur son côté inférieur opposé à l'axe de pivotement horizontal (H).

4. Dispositif de porte de scories selon l'une quelconque des revendications précédentes, dans lequel
le pivot de porte de scories (20) comprend une bielle (21), qui est adaptée pour être montée latéralement des deux côtés du tunnel de scories (8) sur la cuve de four (2) de telle sorte qu'elle peut pivoter autour de l'axe de pivotement horizontal (H), et un cylindre hydraulique (22), qui est relié à une extrémité à la bielle (21) et à son autre extrémité est adapté pour être monté sur la cuve de four (2).

5. Dispositif de porte de scories selon l'une quelconque des revendications précédentes, dans lequel
l'élévateur de porte de scories (30) comprend un cylindre de levage hydraulique (31) qui est relié à une extrémité à la porte de scories (11) et à son autre extrémité au pivot de porte de scories (20), et un guide linéaire (32), dans lequel la porte de scories (11) est montée de manière coulissante et qui est monté sur le pivot de porte de scories (20).

6. Dispositif de porte de scories selon l'une quelconque des revendications précédentes, dans lequel
un couvercle de protection (40) est prévu dans la direction verticale au-dessus de la porte de scories (11), du pivot de porte de scories (20) et de l'élévateur de porte de scories (30), dont les dimensions extérieures dans une vue de dessus verticale couvrent la porte de scories (11), le pivot de porte de scories (20) et l'élévateur de porte de scories (30) dans chaque position de pivotement et de levage de ceux-ci.

7. Dispositif de porte de scories selon l'une quelconque des revendications précédentes, dans lequel
la plage d'angles (σ) entre le premier angle de pivotement (α) et le deuxième angle de pivotement (β) est comprise entre 25° et 60°, de préférence 25° ou 30° ou 35° ou 40° ou 41° ou 45° ou 50° ou 55° ou 60°,
le premier angle de pivotement (α) a une valeur dans la plage de 25° à 45°, de préférence de 25° à 35°, de préférence de 26° à 35° par rapport au plan (E) à travers l'axe de pivotement horizontal (H) et est de préférence de 25° ou 26° ou 35°, et
le deuxième angle de pivotement (β) a une valeur dans la plage de 0° à 25°, de préférence de 0° à 20°, de préférence de 0° à 15° par rapport au plan (E) à travers l'axe de pivotement horizontal (H) et est de préférence de 0° ou 5° ou 10° ou 15°.

8. Dispositif de porte de scories selon l'une des revendications précédentes, qui comprend
un dispositif de commande (50), qui est connecté au pivot de porte de scories (20) et à l'élévateur de porte de scories (30) et qui est adapté pour entrer et stocker des paramètres pour contrôler les positions de pivotement et de levage de ceux-ci, et
est adapté pour mesurer la force dépensée lors du déplacement de la porte de scories, soit directement par des capteurs de mesure, soit indirectement par l'évaluation des paramètres des actionneurs, et pour arrêter, lorsqu'une première valeur limite prédéterminée de la force mesurée est atteinte, le mouvement de la porte de scories (11) en direction de la première position de levage minimale inférieure (U) et, si une deuxième valeur limite prédéterminée de la force mesurée est atteinte lors du déplacement de la porte de scories (11), pour interrompre le mouvement et pour émettre un message correspondant.

9. Four métallurgique (1), en particulier four à arc électrique, avec
une cuve de four (2), qui a une paroi latérale (2s) et un tunnel de scories (8), qui est prévu latéralement dans la paroi latérale (2s) de la cuve de four (2) avec une section d'ouverture rectangulaire et qui a des parois latérales (8s), un bord extérieur supérieur (8or) et un fond (8b),
un dispositif de basculement de four avec un berceau (3), sur lequel la cuve de four (2) repose, pour basculer la cuve de four par rapport à l'horizontale d'une fondation (7) sur laquelle le four métallurgique est placé, et
un dispositif de porte de scories selon l'une des revendications 1 à 8,
dans lequel le dispositif de porte de scories est monté sur la cuve de four (2) de telle manière
que, dans une position de basculement horizontale de la cuve de four (2), le plan (E) à travers l'axe de pivotement horizontal (H) est perpendiculaire à l'horizontale,
que l'axe de pivotement horizontal (H) est situé à l'extérieur de la cuve de four (2), et
que la porte de scories (11) dans une position pivotée du pivot de porte de scories (20) autour de l'axe de pivotement horizontal (H) par un troisième angle de pivotement (α'), qui correspond à l'angle de pivotement initial (α) moins 0 à 5°, et dans une position de l'élévateur de porte de scories (30) dans laquelle la porte de scories (11) est déplacée en direction de la première position de levage minimale inférieure (U) jusqu'à ce qu'elle touche le fond (8b) du tunnel de scories (8), fait saillie en biais de l'extérieur vers le haut dans le tunnel de scories et est opposée aux parois latérales (8s) avec le jeu (s).

10. Four à arc électrique selon la revendication 9, dans lequel
le fond (8b) du tunnel de scories (8), dans une vue de dessus, est prolongé latéralement au-delà de la paroi latérale (2s) de la cuve de four (2) jusqu'à un bord de fond (8r),
la porte de scories (11) dans une position pivotée du pivot de porte de scories (20) autour de l'axe de pivotement horizontal (H) par un quatrième angle de pivotement (β'), qui correspond à l'angle de pivotement secondaire (β) moins 0 à 5°, et dans une position de l'élévateur de porte de scories (30) dans laquelle la porte de scories (11) est déplacée en direction de la première position de levage minimale inférieure (U) jusqu'à ce qu'elle touche le fond (8b) du tunnel de scories (8), touche le fond au bord de fond (8r).

11. Four à arc électrique selon la revendication 9 ou 10, dans lequel
le dispositif de porte de scories (10) comprend le dispositif de commande (50) selon la revendication 8, qui est adapté pour contrôler les positions de pivotement du pivot de porte de scories (20) et les positions de levage de l'élévateur de porte de scories (30) de telle manière que, pour nettoyer le tunnel de scories (8), la porte de scories (11) effectue un mouvement de nettoyage à partir d'une position dans le tunnel de scories en direction de l'extérieur du four hors du tunnel de scories,
soit parallèlement au sol à une distance choisissable du sol ou en contact avec le sol (8b) du tunnel de scories (8),
soit dans un mouvement sur un segment de cercle avec une distance minimale lors de l'approche la plus proche, cette distance minimale pouvant également être réglée sur zéro.

12. Procédure pour nettoyer une ouverture de scories d'un four métallurgique (1), en particulier d'un four à arc électrique, qui a une cuve de four (2), qui a une paroi latérale (2s), un tunnel de scories (8), qui est prévu latéralement dans la paroi latérale (2s) de la cuve de four (2) avec une section d'ouverture rectangulaire et qui a des parois latérales (8s), un bord extérieur supérieur (8or) et un fond (8b), et un agencement de porte de scories selon l'une des revendications 1 à 8, dont l'axe de pivotement horizontal (H) est situé à l'extérieur de la cuve de four (2), avec les étapes :
a) déplacer le pivot de porte de scories (20), après une scorification, où la porte de scories (11) est déplacée par l'élévateur de porte de scories (30) dans la deuxième position de levage maximale supérieure (O) ou près de celle-ci, dans une position pivotée autour de l'axe de pivotement horizontal (H) par un troisième angle de pivotement (α'), qui correspond à l'angle de pivotement initial (α) moins 0 à 5° ;
b) déplacer la porte de scories (11) par l'élévateur de porte de scories (30) en direction de la première position de levage minimale inférieure (U) jusqu'à une distance prédéterminée du fond (8b) du tunnel de scories (8), de sorte que la porte de scories fait saillie en biais de l'extérieur vers le haut dans le tunnel de scories et est opposée à ses parois latérales (8s) avec le jeu (s) ;
c) déplacer le pivot de porte de scories (20) autour de l'axe de pivotement horizontal (H) en direction du deuxième angle de pivotement (β) jusqu'à un quatrième angle de pivotement (β'), qui correspond au deuxième angle de pivotement (β) moins 0 à 5°, soit en déplaçant simultanément la porte de scories (11) par l'élévateur de porte de scories (30) pour maintenir au moins la distance prédéterminée du fond (8b) du tunnel de scories (8), de sorte que la porte de scories est déplacée au moins à la distance prédéterminée parallèlement à et le long du fond (8b), soit dans un mouvement sur un segment de cercle avec une distance minimale à l'approche la plus grande ; et
d) déplacer le pivot de porte de scories (20) autour de l'axe de pivotement horizontal (H) en direction du premier angle de pivotement (α) dans une position pivotée par le troisième angle de pivotement (α'), qui correspond à l'angle de pivotement initial (α) moins 0 à 5°, avec la porte de scories (11) déplacée en direction de la deuxième position de levage maximale supérieure (O), de sorte que la porte de scories est alors déplacée à une distance du fond (8b), qui est supérieure à la distance prédéterminée ou à la distance minimale ; et
e) déplacer la porte de scories (11) par l'élévateur de porte de scories (30) en direction de la première position de levage minimale inférieure (U) jusqu'à ce qu'elle touche le fond (8b) du tunnel de scories (8), de sorte que la porte de scories fait saillie en biais de l'extérieur vers le haut dans le tunnel de scories et est opposée à ses parois latérales (8s) avec le jeu (s).

13. Procédure selon la revendication 12, dans laquelle
les étapes a) à c) sont répétées avant l'exécution des étapes d) et e), dans le cas du mouvement parallèle au sol avec une distance prédéterminée réduite par rapport à la précédente distance prédéterminée du fond (8b) du tunnel de scories (8) et dans le cas du mouvement sur un segment de cercle avec une distance minimale réduite par rapport à la distance minimale précédente à l'approche la plus grande.

14. Procédure selon la revendication 12 ou 13, dans laquelle
la distance prédéterminée ou la distance minimale ou la distance prédéterminée réduite ou la distance minimale réduite est fixée à zéro.

15. Procédure selon l'une des revendications 12 à 14, dans laquelle
la force appliquée pour déplacer la porte de scories dans les étapes a) à e) est mesurée, et
à l'étape b), lorsqu'un premier seuil prédéterminé de la force mesurée est atteint, le mouvement de la porte de scories (11) en direction de la première position de levage minimale inférieure (U) est arrêté et la distance du fond (8b) du tunnel de scories (8) est utilisée comme la distance prédéterminée ou la distance minimale pour l'étape c) suivante, et
aux étapes a) à e), lorsqu'un deuxième seuil prédéterminé individuellement pour chacune des étapes de la force mesurée est atteint, l'exécution de la procédure est interrompue.
